# DEMANDE DE BREVET EUROPEEN

(11) **EP 3 287 332 A1**
(43) Date de publication de la demande: **28.02.2018**
(21) Numéro de dépôt: 17180542.7
(22) Date de dépôt: 10.07.2017
(51) Int. Cl.: B60S 1/08, B60S 1/58, H01H 19/58

(54) **DISPOSITIF DE MOTORISATION D'ESSUIE-GLACE ET SYSTÈME D'ESSUYAGE**

(30) Priorité: 24.08.2016 FR 1657894
(71) Demandeur: Valeo Systèmes d'Essuyage, 78322 Le Mesnil Saint Denis (FR)
(72) Inventeur: Girodot, M. Cyrille, 63500 ISSOIRE (FR)
(74) Mandataire: Callu Danseux, Violaine

(57) **Abrégé**

L'invention concerne un dispositif de motorisation 3 comportant un moteur 10 électrique d'entraînement d'un essuie-glace 2 de véhicule automobile selon un mouvement de va-et-vient et un dispositif de repérage d'une position de repos 4 dudit moteur 10, ladite position de repos étant une position dans laquelle la rotation dudit moteur 10 est arrêtée afin d'arrêter un cycle de va-vient de l'essuie-glace 2 en début ou fin de phase montante ou en début ou en fin de phase descendante de l'essuie-glace 2, caractérisé en ce que ledit dispositif de repérage d'une position de repos 4 comprend un premier et un deuxième repères angulaires 20a, 20b, en ce que ledit moteur 10 est configuré pour entraîner en rotation lesdits premier et deuxième repères angulaires 20a, 20b, le premier et le deuxième repères angulaires 20a, 20b étant agencés sur un cercle C et diamétralement opposés, et en ce que ledit dispositif de motorisation 3 est configuré pour que l'un des premier et deuxième repères angulaires 20a, 20b puisse au choix correspondre à la position de repos 4 dudit moteur 10.

L'invention concerne encore un système d'essuyage 1 comprenant deux dispositifs de motorisation 3.

## Description

L'invention concerne un dispositif de motorisation comportant un moteur électrique d'entraînement d'un essuie-glace de véhicule automobile selon un mouvement de va-et-vient et un dispositif de repérage d'une position de repos dudit moteur. L'invention concerne aussi un système d'essuyage pour essuie-glaces de véhicule automobile.

Les motoréducteurs d'essuie-glace de véhicule automobile sont munis d'un repère permettant de repérer une position de repos du moteur dans une position angulaire prédéterminée après que l'utilisateur a commandé l'arrêt de l'essuyage. On peut ainsi obtenir un arrêt du moteur dans une position angulaire prédéterminée répétable, par exemple en vue de l'arrêt de l'essuie-glace à l'horizontal, au bas de la surface vitrée.

Le balayage d'une ou de deux surfaces vitrées de certains véhicules automobiles est réalisé au moyen de deux essuie-glaces dont le balayage est réalisé de manière symétrique. C'est notamment le cas pour le balayage des surfaces vitrées des portières arrières droite et gauche articulées de certains véhicules équipés de deux portes arrières.

Dans ces véhicules, les positions de repos des essuie-glaces droite et gauche sont symétriquement inversées. De cela résulte un positionnement différent du repère de position de repos du moteur. Il est donc nécessaire de différencier les motoréducteurs droit et gauche afin d'éviter d'éventuelles erreurs au cours du montage du véhicule automobile. Pour cela, différents moyens peuvent être utilisés.

Un des moyens consiste à inverser le positionnement des moyens de fixation pour détromper les boîtiers de fermeture dans lequel les motoréducteurs sont montés de sorte qu'il n'est pas possible de monter le motoréducteur destiné à être monté sur la portière droite sur la portière gauche et inversement.

La fabrication est ainsi relativement coûteuse car il faut prévoir deux outillages distincts pour fabriquer des motoréducteurs dont le repère permet le repérage de positions de repos symétriques. Egalement, deux outillages distincts sont à prévoir pour les moulages des boîtiers de fermeture ayant des moyens de fixations symétriquement inversés. En outre, la gestion de l'approvisionnement des motoréducteurs est relativement contraignante car il est nécessaire de prévoir deux flux d'approvisionnement distincts pour ces deux références différentes.

Un but de la présente invention est de s'affranchir des inconvénients ci-dessus.

A cet effet, la présente invention a pour objet un dispositif de motorisation comportant un moteur électrique d'entraînement d'un essuie-glace de véhicule automobile selon un mouvement de va-et-vient et un dispositif de repérage d'une position de repos dudit moteur, ladite position de repos étant une position dans laquelle la rotation dudit moteur est arrêtée afin d'arrêter un cycle de va-vient de l'essuie-glace en début ou fin de phase montante ou en début ou en fin de phase descendante de l'essuie-glace, dans lequel ledit dispositif de repérage d'une position de repos comprend un premier et un deuxième repères angulaires, dans lequel ledit moteur est configuré pour entraîner en rotation lesdits premier et deuxième repères angulaires, le premier et le deuxième repères angulaires étant agencés sur un cercle C et diamétralement opposés, et dans lequel ledit dispositif de motorisation est configuré pour que l'un des premier et deuxième repères angulaires puisse au choix correspondre à la position de repos dudit moteur.

Les premier et deuxième repères angulaires sont donc distants. Les repères angulaires positionnés symétriquement de façon à correspondre aux deux positions extrêmes des essuie-glaces permettent qu'un même dispositif de détection de position de repos puisse être utilisé pour les portières droite et gauche. Une position de repos est déterminée par programme dans une unité de traitement du véhicule automobile comme correspondant au premier ou au deuxième repère angulaire.

Selon un exemple de réalisation, le premier et le deuxième repères angulaires sont distincts, ils présentent des angles au centre du cercle C différents. On peut ainsi discriminer les phases montantes et descendantes du cycle de balayage d'un dispositif de repérage d'une position de repos et le repère intermédiaire tel que décrit ci-dessous peut alors avantageusement être omis.

Selon un autre exemple de réalisation, le premier et le deuxième repères angulaires sont distincts, ils présentent des magnétisations différentes. On peut ainsi également discriminer les phases montantes et descendantes du cycle de balayage d'un dispositif de repérage d'une position de repos. Le repère intermédiaire tel que décrit ci-dessous peut ici aussi avantageusement être omis.

On évite ainsi l'emploi d'outillages différents de l'art antérieur pour fabriquer des motoréducteurs dont le repère doit être positionné dans les positions de repos symétriques et on évite l'emploi d'outillages différents pour les moulages des boîtiers de fermeture détrompés. Les coûts de fabrication et de montage sont donc réduits. En outre, la gestion de l'approvisionnement est facilitée puisque les dispositifs de motorisation droite et gauche sont identiques.

Selon un exemple de réalisation, le dispositif de repérage d'une position de repos comporte en outre au moins un repère angulaire intermédiaire, agencé sur le cercle C dans lequel s'inscrivent le premier et le deuxième repères angulaires, en étant espacé du premier et du deuxième repères angulaires. En outre, le nombre de repères angulaires intermédiaires agencés sur un demi-cercle entre le premier et le deuxième repères angulaires est supérieur au nombre de repères angulaires intermédiaires agencés sur l'autre demi-cercle.

Avec au moins un repère angulaire intermédiaire plutôt que seulement un premier et un deuxième repères angulaires distincts, on s'affranchit d'éventuelles erreurs d'interprétation du signal de détection pouvant survenir du fait d'éventuelles différences de vitesses de rotation du moteur, qui pourraient fausser la durée mesurée de contact des premier et deuxième repères angulaires distincts.

Également, le temps de rafraîchissement de l'unité de traitement peut ne pas permettre de détecter avec suffisamment de précision les « bornes » des repères angulaires distincts, de sorte que l'information de l'angle au centre du cercle C ne permette pas d'éviter un cycle de balayage de trop.

Le repère angulaire intermédiaire en revanche permet de discriminer les phases montantes et descendantes avec une meilleure précision car le comptage des créneaux est indépendant du temps de rafraichissement de l'unité de traitement et de la vitesse de rotation du moteur. On est donc assuré de ne pas réaliser un cycle de balayage de trop, ce qui permet notamment un balayage sur un seul cycle de balayage, ou un balayage dit « intermittent », dans lequel les essuie-glaces restent pendant une durée prédéterminée en position de repos entre chaque cycle de balayage.

En outre, on peut stopper la rotation du moteur dès que l'unité de traitement détecte un front montant attendu comme celui du créneau correspondant à la position angulaire prédéterminée d'une position de repos. La détection sur front montant permet d'éviter d'avoir à mesurer l'angle au centre du cercle C du repère angulaire commuté avant de pouvoir déterminer s'il correspond à l'une ou l'autre des positions extrêmes.

Selon une ou plusieurs caractéristiques du dispositif de repérage d'une position de repos, prises seules ou en combinaison,
- le dispositif de repérage d'une position de repos comporte un unique repère angulaire intermédiaire,
- les angles des repères angulaires au centre du cercle C sont identiques,
- l'angle du repère angulaire intermédiaire au centre du cercle C est différent des angles au centre du cercle C des premier et deuxième repères angulaires,
- le premier et le deuxième repères angulaires présentent des angles au centre du cercle C différents,
- les repères angulaires sont métalliques,
- le dispositif de repérage d'une position de repos comporte un doigt suiveur de repère, élastiquement sollicité à l'encontre du cercle C dans lequel s'inscrivent les repères angulaires,
- le dispositif de repérage d'une position de repos comporte :
   - une piste continue annulaire, coaxiale au cercle C dans lequel s'inscrivent les repères angulaires et connectée aux repères angulaires, et
   - un doigt suiveur de piste, élastiquement sollicité contre la piste continue annulaire,
- la piste continue annulaire et le doigt suiveur de piste sont métalliques,
- les repères angulaires sont portés par un élément rotatif entraîné en rotation par le moteur électrique d'essuie-glace, les repères angulaires s'inscrivant sur un cercle C coaxial à l'élément rotatif,
- l'élément rotatif est une roue dentée entraînée en rotation par le moteur électrique d'essuie-glace,
- l'élément rotatif est en matériau plastique,
- le dispositif de repérage d'une position de repos comporte des moyens de détection électriques ou optiques ou magnétiques des repères angulaires.

L'invention a aussi pour objet un système d'essuyage comprenant deux dispositifs de motorisation selon l'une des définitions ci-dessus pour l'entraînement d'un essuie-glace respectif, ledit système étant tel qu'un premier et un deuxième essuie-glaces sont configurés pour balayer de manière symétrique au moins une surface vitrée d'un véhicule automobile.

Selon une ou plusieurs caractéristiques du système d'essuyage, prises seules ou en combinaison,
- les dispositifs de repérage d'une position de repos des dispositifs de motorisation sont identiques,
- les positions de repos des moteurs sont symétriquement inversées,
- l'unité de traitement est apte à initialiser ladite position de repos de chacun des moteurs respectivement sur le premier ou le deuxième repère angulaire,
- les positions de repos des moteurs sont symétriquement inversées. Ainsi, on peut concevoir un système d'essuyage dans lequel les dispositifs de repérage d'une position de repos des dispositifs de motorisation sont identiques et dans lequel un premier moteur présente une position de repos initialisée sur le premier repère angulaire, et un deuxième moteur présente une positon de repos initialisée sur le deuxième repère angulaire, de sorte que la position de repos de chacun des moteurs est symétriquement inversée.

D'autres avantages et caractéristiques apparaîtront à la lecture de la description d'un exemple non limitatif de réalisation de l'invention, ainsi que sur les figures annexées sur lesquelles :
- la figure 1 représente de façon schématique un système d'essuyage pour des portières arrières de véhicule automobile,
- la figure 2a montre des éléments d'une première partie d'un dispositif de motorisation,
- la figure 2b montre un organe d'embiellage de la première partie du dispositif de motorisation de la figure 2a,
- la figure 3 montre des éléments d'une deuxième partie du dispositif de motorisation s'assemblant avec la première partie montrée sur la figure 2a,
- la figure 4 montre une représentation schématique d'un premier exemple de dispositif de repérage d'une position de repos,
- la figure 5 montre un exemple de signal de détection en fonction du temps obtenu pour un dispositif de repérage d'une position de repos du système d'essuyage de la portière gauche,
- la figure 6 montre un exemple de signal de détection en fonction du temps obtenu pour un dispositif de repérage d'une position de repos du système d'essuyage de la portière droite,
- la figure 7 montre une représentation schématique d'un deuxième exemple de dispositif de repérage d'une position de repos, et
- la figure 8 montre une représentation schématique d'un troisième exemple de dispositif de repérage d'une position de repos.

Sur ces figures, les éléments identiques ou analogues portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. Des caractéristiques de différents modes de réalisation peuvent également être combinées pour fournir d'autres réalisations.

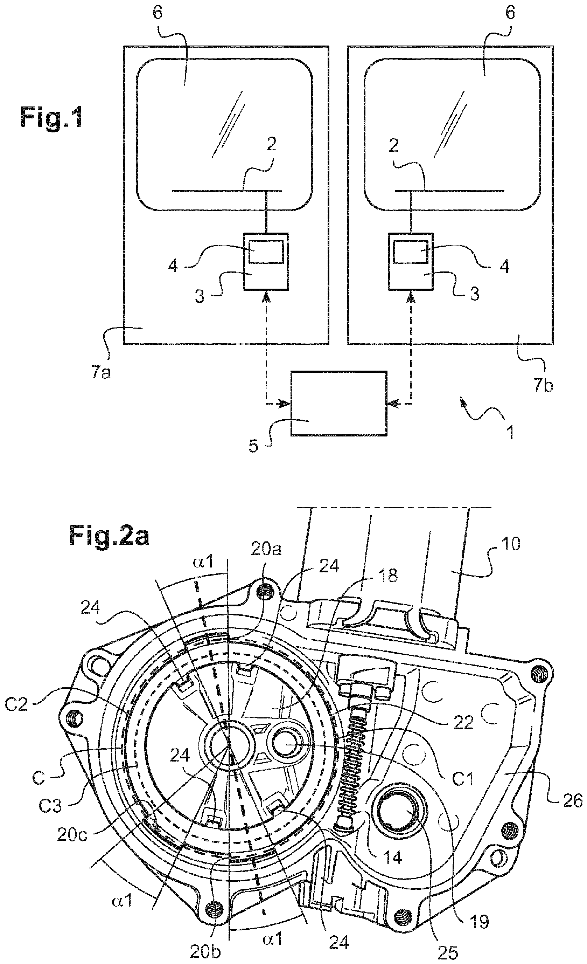

En référence à la figure 1, on a représenté un système d'essuyage 1 pour essuie-glaces 2 de véhicule automobile.

Le système d'essuyage 1 comporte deux dispositifs de motorisation 3 pour l'entraînement d'un essuie-glace 2 respectif.

Chaque dispositif de motorisation 3 comporte un moteur 10 électrique d'entraînement d'un essuie-glace 2 respectif et un dispositif de repérage d'une position de repos 4 du moteur 10.

Les essuie-glaces 2 sont destinés à balayer au moins une surface vitrée 6 d'un véhicule automobile de manière symétrique (également appelé « en opposition» ou « papillon »), chaque cycle de balayage comprenant une phase montante (ou « aller ») de l'essuie-glace 2 sur la surface vitrée 6 suivie d'une phase descendante (ou « retour »), à la fin de laquelle le balai d'essuie-glace 2 retrouve sa position initiale. Les essuie-glaces 2 sont par exemple destinés à balayer deux surfaces vitrées 6 de portières arrières 7a, 7b articulées d'un véhicule automobile.

Les dispositifs de détection d'une position de repos 4 sont reliés à une unité de traitement 5 du véhicule. L'unité de traitement 5 est une unité électronique programmable centrale du véhicule, telle qu'un ordinateur, qui contrôle également le fonctionnement d'autres composants du véhicule, tel que l'ouverture des portières, les clignotants, ...

Les dispositifs de détection d'une position de repos 4 permettent à l'unité de traitement 5 de commander l'arrêt des moteurs 10 dans une position angulaire prédéterminée dite « position de repos » (ou « arrêt fixe » ou « position de stationnement »), (ou « park position » en anglais), après que l'utilisateur a commandé l'arrêt du moteur 10, comme par exemple en vue de l'arrêt des essuie-glaces 2 sensiblement à l'horizontal ou sensiblement à la verticale, dans une des deux positions extrêmes de l'essuie-glace 2, c'est-à-dire en début ou en fin de phase montante ou en début ou en fin de phase descendante.

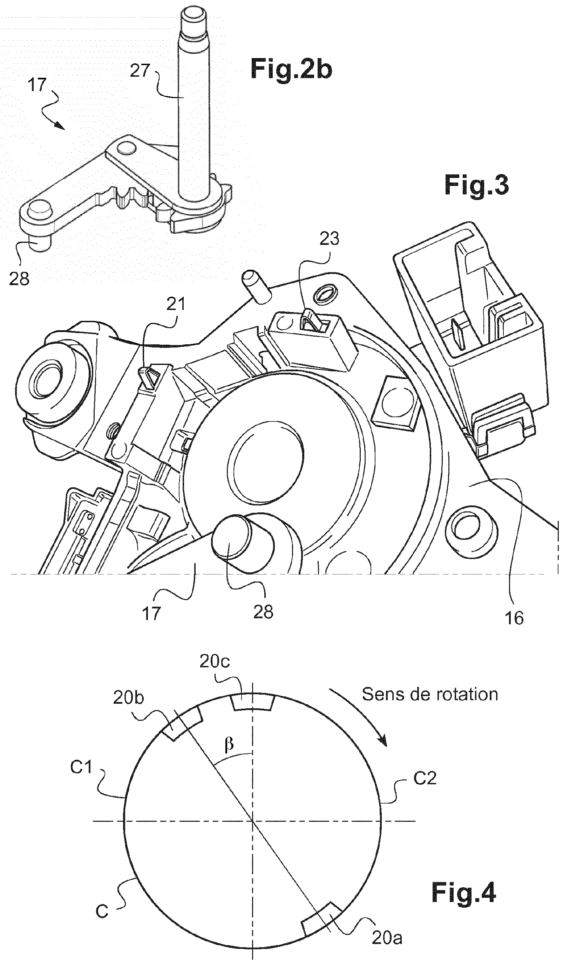

Mieux visible sur un exemple de réalisation représenté sur les figures 2a, 2b et 3, le moteur 10, à courant continu, entraîne un arbre faisant saillie du rotor, qui porte une vis sans fin 14. Le dispositif de motorisation 3 comprend également une roue dentée 18 qui engrène avec la vis sans fin 14, ainsi qu'un organe d'embiellage 17 (figure 2b).

L'organe d'embiellage 17 est un système bielle-manivelle présentant un axe d'entrée 28 et un axe de sortie 27, articulés. L'axe d'entrée 28 est monté dans une cavité 19 excentrée de la roue dentée 18 et une première extrémité de l'axe de sortie 27 est montée dans une cavité 25 du carter 26 du dispositif de motorisation 3.

La deuxième extrémité de l'arbre de sortie 27 est destinée à être assemblée avec un élément d'essuie-glace 2 à entraîner en pivotement, tel qu'une tête de bras d'essuie-glace (non représentée).

Comme on peut le voir dans l'exemple illustratif de la figure 2a, le dispositif de repérage d'une position de repos 4 comporte un premier et un deuxième repères angulaires 20a, 20b.

Les premier et deuxième repères angulaires 20a, 20b sont portés par un élément rotatif du dispositif de motorisation 3 entraîné en rotation par le moteur 10 électrique d'essuie-glace 2 en fonctionnement. Ils sont par exemple portés par la roue dentée 18.

Le premier et le deuxième repères angulaires 20a, 20b s'inscrivent sur un cercle C coaxial à l'élément rotatif et ils sont diamétralement opposés. Les repères angulaires 20a et 20b sont en outre positionnés de façon à correspondre aux positions extrêmes des essuie-glaces 2 au cours d'un cycle de balayage. Ainsi, la rotation de l'élément rotatif sur 360° correspondant à un cycle de balayage, comprend une phase montante sur un demi-cercle C1 (ou C2) situé entre les premier et deuxième repères angulaires 20a et 20b et une phase descendante sur l'autre demi-cercle.

Les premier et deuxième repères angulaires 20a, 20b présentent par exemple la forme d'au moins une partie de secteur angulaire, telle qu'une forme d'arc de cercle. On prévoit par exemple qu'ils couvrent un angle α1 au centre du cercle C compris entre 10 et 30°.

Selon un mode de réalisation, le premier et le deuxième repères angulaires sont distincts, ils présentent des magnétisations différentes. On peut donc discriminer les phases montantes et descendantes du cycle de balayage d'un dispositif de repérage d'une position de repos.

Selon un autre mode de réalisation, le dispositif de repérage d'une position de repos 4 comporte au moins un repère angulaire intermédiaire 20c.

Le au moins un repère angulaire intermédiaire 20c est agencé sur le cercle C sur lequel s'inscrivent le premier et le deuxième repère angulaire 20a, 20b. Il peut être agencé n'importe où sur le cercle C mais il est espacé du premier et du deuxième repères angulaires, 20a, 20b, c'est à dire qu'il ne chevauche pas le premier et/ou le deuxième repère angulaire 20a, 20b. Par exemple, le deuxième repère angulaire 20b et le repère angulaire intermédiaire 20c sont espacés d'un angle β au centre du cercle C, tel que mesuré entre le centre respectif du deuxième repère angulaire 20b et le centre du repère angulaire intermédiaire, de 40° (figure 4).

Comme les premier et deuxième repères angulaires 20a, 20b, le au moins un repère angulaire intermédiaire 20c est porté par l'élément rotatif entraîné en rotation par le moteur 10, tel que la roue dentée 18 et s'inscrit sur le cercle C coaxial à l'élément rotatif. Le repère angulaire intermédiaire 20c présente par exemple la forme d'au moins une partie de secteur angulaire, telle qu'une forme d'arc de cercle, couvrant par exemple un angle α1 au centre du cercle C compris entre 10 et 30°.

En outre, le nombre de repères angulaires intermédiaires 20c agencés sur un premier demi-cercle C1 entre le premier et le deuxième repère angulaire 20a, 20b est supérieur au nombre de repères angulaires intermédiaires 20c agencés sur le deuxième demi-cercle C2 entre le premier et le deuxième repères angulaires 20a, 20b.

Dans l'exemple représenté sur la figure 2a, le dispositif de repérage d'une position de repos 4 comporte un unique repère angulaire intermédiaire 20c agencé sur le deuxième demi-cercle C2 et aucun repère angulaire intermédiaire sur l'autre demi-cercle C1.

Selon un exemple de réalisation représenté sur les figures 2a et 4, les angles α1 au centre du cercle C des premier et deuxième repères angulaires 20a, 20b et du repère angulaire intermédiaire 20c sont identiques.

Selon un exemple de réalisation, la détection des repères angulaires 20a, 20b, 20c est réalisée par commutation électrique, par des moyens de détection électriques des repères angulaires 20a, 20b, 20c.

Pour cela, le dispositif de repérage d'une position de repos 4 comporte un doigt suiveur de repère 21, monté de manière élastique dans un élément de fermeture 16 du dispositif de motorisation 3 (figure 3).

Le doigt suiveur de repère 21 est élastiquement sollicité contre l'élément rotatif, sur le cercle C dans lequel s'inscrivent les repères angulaires 20a, 20b, 20c.

En outre, on prévoit par exemple que l'élément rotatif est en matériau isolant, tel qu'en plastique, tel qu'en polyoxyméthylène de sigle POM.

On prévoit également que les repères angulaires 20a, 20b, 20c soient des éléments conducteurs. Ils sont par exemple formés par des pistes métalliques, par exemple découpées, telles que des pistes de laiton ou de cuivre.

Selon un autre exemple, on prévoit que l'élément rotatif est conducteur et que les repères angulaires soient réalisés en matériau isolant.

Le dispositif de repérage d'une position de repos 4 comporte également une piste continue annulaire 22 (figure 2a) et un doigt suiveur de piste 23 (figure 3), élastiquement sollicité contre la piste continue annulaire 22.

La piste continue annulaire 22 peut être portée par l'élément rotatif. Elle est coaxiale à l'élément rotatif et aux repères angulaires 20a, 20b, 20c. La piste continue annulaire 22 est en outre conductrice et électriquement connectée aux repères angulaires 20a, 20b, 20c conducteurs.

La piste continue annulaire 22 est par exemple métallique et peut être réalisée d'une seule pièce avec les repères angulaires 20a, 20b, 20c conducteurs, obtenue par exemple par découpe. La piste continue annulaire 22 et les repères angulaires 20a, 20b, 20c sont ainsi agencés dans le même plan.

Selon un exemple de réalisation visible sur la figure 2a, la piste continue annulaire 22 est située sur un cercle C3, intérieur et coaxial au cercle C, dans lequel s'inscrivent les repères angulaires 20a, 20b, 20c.

La plaque métallique comprenant la piste continue annulaire 22 et les repères angulaires 20a, 20b, 20c, peut être maintenue sur l'élément rotatif au moyen de pattes repliées 24 (au moins deux) de la plaque métallique s'insérant dans des encoches complémentaires de l'élément rotatif (on a représenté par exemple quatre pattes repliées 24 sur la figure 2a).

En outre, les doigts suiveurs de secteur 21 et de piste 23 sont conducteurs.

Selon un exemple de réalisation, les doigts suiveurs de secteur 21 et de piste 23 sont formés par des lames métalliques recourbées sur elles-mêmes (en « V ») de façon à faire saillie vers l'élément rotatif, c'est-à-dire vers respectivement les repères angulaires 20a, 20b, 20c et la piste continue annulaire 22. Les lames métalliques recourbées permettent de procurer l'élasticité nécessaire pour solliciter les doigts suiveurs 21, 23 élastiquement à l'encontre du cercle C et respectivement de la piste continue annulaire 22.

Les doigts suiveurs de secteur et de piste peuvent présenter d'autres formes de réalisation. Par exemple, le doigt suiveur de secteur comporte un pion et un organe élastique, tel qu'un ressort, sollicitant le pion vers l'élément rotatif (non représenté).

On peut prévoir en outre de ménager une rainure annulaire dans l'élément rotatif sur le cercle C dans lequel s'inscrivent les repères angulaires 20a, 20b, 20c afin de faciliter le parcours du doigt suiveur de repère 21 le long du cercle C.

Par ailleurs, les doigts suiveurs de secteur 21 et de piste 23 sont raccordés à l'unité de traitement 5 du véhicule qui, en fonctionnement, alimente un des deux doigts suiveurs 21, 23 et reçoit un signal de détection sur l'autre doigt suiveur 21, 23, le signal de détection comportant un créneau lorsque le doigt suiveur de repère 21 contacte un repère angulaire 20a, 20b, 20c.

Ainsi, en fonctionnement du système d'essuyage 1, la rotation de l'élément rotatif sur 360°, la roue dentée 18 dans le cas présent, entraîne les contacts successifs des repères angulaires 20a, 20b, 20c par le doigt suiveur de repère 21 ainsi que le contact continu entre le doigt suiveur de piste 23 et la piste continue annulaire 22.

Le contact d'une part, entre le doigt suiveur de repère 21 et un repère angulaire 20a, 20b, 20c et d'autre part, entre le doigt suiveur de piste 23 et la piste continue annulaire 22, permet le passage d'un courant électrique entre les deux doigts suiveurs 21, 23, générant un créneau sur le signal de détection reçu par l'unité de traitement 5 du véhicule.

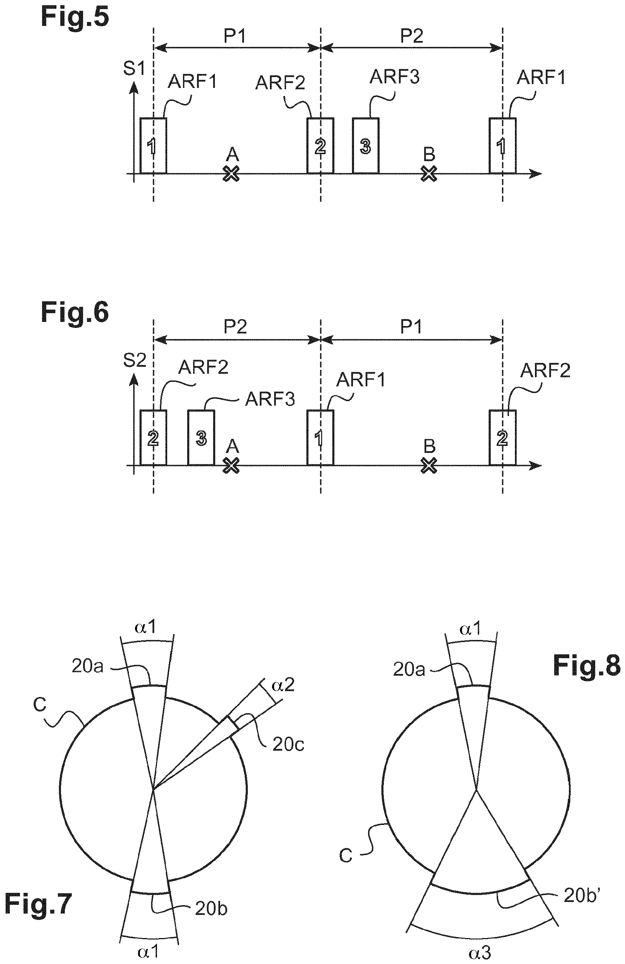

Ainsi on a représenté sur la figure 5, le signal de détection S1 obtenu sur un cycle de balayage pour un premier dispositif de repérage d'une position de repos 4 du système d'essuyage 1, tel que celui de l'essuie-glace 2 permettant l'essuyage de la surface vitrée 6 de la portière arrière 7a gauche (vue depuis l'arrière du véhicule), le dispositif de détection de position de repos 4 représenté sur la figure 4 tournant en sens horaire.

L'unité de traitement 5 est configurée pour initialiser une position de repos du moteur 10 sur le premier ou le deuxième repère angulaire 20a, 20b, par exemple sur le premier repère angulaire 20a.

Lorsque le doigt suiveur de repère 21 parcourt le premier demi-cercle C1, correspondant par exemple à la phase montante du cycle de balayage, le signal de détection S1 reçu par l'unité de traitement 5 comporte, sur une première portion P1, un premier créneau ARF1 correspondant au contact du premier repère angulaire 20a (première position extrême de l'essuie-glace 2) et un deuxième créneau ARF2 correspondant au contact du deuxième repère angulaire 20b (deuxième position extrême de l'essuie-glace 2). Entre le premier repère angulaire 20a et le deuxième repère angulaire 20b, le doit suiveur de repère 21 contacte le matériau non conducteur de l'élément rotatif, le signal électrique reçu par l'unité de traitement 5 est donc nul.

Puis, lorsque le doigt suiveur de repère 21 balaie le deuxième demi-cercle C2, correspondant dans l'exemple, à la phase descendante du cycle de balayage, le signal de détection S1 comporte, sur une deuxième portion P2, outre les premier et deuxième créneaux ARF2, ARF1, un troisième créneau ARF3 correspondant au contact du repère angulaire intermédiaire 20c.

Les premier et deuxième repères angulaires 20a, 20b étant diamétralement opposés et positionnés de façon à correspondre aux positions extrêmes des essuie-glaces 2 en phase montante et descendante, le signal de détection S1 présente un écart identique entre les premier et deuxième créneaux ARF1, ARF2, permettant d'identifier la succession de phases du cycle de balayage.

Le signal de détection S1 obtenu est en outre asymétrique, la première portion P1 du signal de détection S1 étant différente de la deuxième portion P2 qui comporte un troisième créneau ARF3. L'unité de traitement 5 peut ainsi déterminer, lorsque l'utilisateur demande l'arrêt de l'essuyage (cas A ou B), si l'essuie-glace 2 est en phase montante ou descendante, en comptant le nombre de troisièmes créneaux ARF3 situés entre les premier et deuxième créneaux régulièrement espacés ARF1, ARF2.

L'unité de traitement 5 peut ensuite déterminer si elle doit commander l'arrêt du moteur 10 à la détection du front montant du prochain créneau ARF1 dont elle a anticipé qu'il correspondra au prochain repère angulaire détecté (cas B sur la figure 5) puisqu'elle a déterminé être en phase descendante du cycle de balayage (portion P2) ou si elle doit attendre le passage de trois repères angulaires successifs 20b, 20c, 20a avant que le moteur 10 atteigne la position angulaire déterminée pour l'arrêt fixe (cas A sur la figure 5).

Avec au moins un repère angulaire intermédiaire 20c plutôt que seulement un premier et un deuxième repères angulaires 20a, 20b' distincts, on s'affranchit d'éventuelles erreurs d'interprétation du signal de détection S1 pouvant survenir du fait d'éventuelles différences de vitesses de rotation du moteur 10, qui pourraient fausser la durée mesurée du contact des premier et deuxième repères angulaires 20a, 20b' distincts.

Également, le temps de rafraichissement de l'unité de traitement 5 peut ne pas permettre de détecter avec suffisamment de précision les « bornes » des repères angulaires 20a, 20b' distincts, de sorte que l'information de l'angle au centre du cercle C ne permette pas d'éviter un cycle de balayage de trop.

Le repère angulaire intermédiaire 20c en revanche permet de discriminer les phases montantes et descendantes avec une meilleure précision car le comptage des créneaux est indépendant du temps de rafraichissement de l'unité de traitement 5 et de la vitesse de rotation du moteur 10. On est donc assuré de ne pas réaliser un cycle de balayage de trop, ce qui permet notamment un balayage sur un seul cycle de balayage, ou un balayage dit « intermittent », dans lequel les essuie-glaces 2 restent pendant une durée prédéterminée en position de repos entre chaque cycle de balayage.

En outre, on peut stopper la rotation du moteur 10 dès que l'unité de traitement 5 détecte un front montant attendu par l'unité de traitement 5 comme celui du créneau correspondant à la position angulaire prédéterminée d'une position de repos. La détection sur front montant permet d'éviter d'avoir à mesurer l'angle au centre du cercle C du repère angulaire 20a, 20b' commuté avant de pouvoir déterminer s'il correspond à l'une ou l'autre des positions extrêmes.

Ce même dispositif de repérage d'une position de repos 4 peut être utilisé pour le deuxième dispositif de motorisation 3 du système d'essuyage 1.

Ainsi, on a représenté sur la figure 6, le signal de détection S2 obtenu sur un cycle de balayage pour un deuxième dispositif de repérage d'une position de repos 4 du système d'essuyage 1, pour l'essuyage de la surface vitrée 6 de la portière arrière 7b droite (vue depuis l'arrière du véhicule).

Le dispositif de détection de position de repos 4 tourne également en sens horaire, l'inversion de la rotation des essuie-glaces 2 étant assurée par une position de repos du moteur 10 diamétralement opposée à celle du moteur 10 de la porte arrière 7a gauche.

L'unité de traitement 5 est configurée pour initialiser une position de repos du moteur 10 lorsque le doigt suiveur de repère 21 atteint une position symétrique d'une position de repos du premier dispositif de repérage d'une position de repos 4, c'est-à-dire le deuxième repère angulaire 20b dans l'exemple. Les positions de repos du dispositif de détection de position de repos 4 des portières droite et gauche sont ainsi symétriquement inversées.

Le parcours du deuxième demi-cercle C2 correspond donc à la phase montante du cycle de balayage. Le doigt suiveur de repère 21 du deuxième dispositif de détection de position de repos 4 parcourt ainsi le deuxième demi-cercle C2 lorsque le doigt suiveur de repère 21 du premier dispositif de détection de position de repos parcourt le premier demi-cercle C1. Le signal de détection S2 reçu par l'unité de traitement 5 comporte ainsi une première portion similaire à la deuxième portion P2.

Puis, lorsque le doigt suiveur de repère 21 balaie le premier demi-cercle C1, correspondant alors à la phase descendante du cycle de balayage, le signal de détection S2 présente une deuxième portion similaire à la première portion P1.

Comme pour le dispositif de détection de position de repos 4 de droite, le signal de détection S2 est asymétrique. Il présente des portions P1, P2 différentes en phase montante et descendante. L'unité de traitement 5 peut ainsi déterminer, lorsque l'utilisateur demande l'arrêt de l'essuyage (cas A ou B), si l'essuie-glace 2 est en phase montante ou descendante, en comptant le nombre de troisièmes créneaux ARF3.

L'unité de traitement 5 peut ensuite déterminer si elle doit commander l'arrêt du moteur 10 à la détection du front montant du prochain créneau ARF2 dont elle a anticipé qu'il correspondra au prochain deuxième repère angulaire 20b (cas B sur la figure 6) puisqu'elle a déterminé que le balayage est en phase descendante (portion P1) ou si elle doit attendre le passage de deux repères angulaires successifs 20a, 20b avant que le moteur 10 atteigne une position angulaire déterminée pour l'arrêt fixe (cas A sur la figure 6) puisqu'elle a déterminé que le balayage est en phase montante (portion P2).

On peut ainsi utiliser le même dispositif de détection de position de repos 4 pour les portières droite et gauche puisqu'une position de repos peut être déterminée dans l'unité de traitement 5 comme correspondant au premier ou au deuxième repère angulaire 20a, 20b par comptage des repères intermédiaires 20c. On évite ainsi l'emploi d'outillages différents de l'art antérieur pour fabriquer des motoréducteurs dont le repère doit être positionné dans les positions de repos symétriques et on évite l'emploi d'outillages différents pour les moulages des boîtiers de fermeture détrompés. Les coûts de fabrication et de montage sont donc réduits. En outre, la gestion de l'approvisionnement est facilitée puisque les dispositifs de motorisation 3 droite et gauche sont identiques.

Selon un deuxième exemple de réalisation représenté sur la figure 7, l'angle α2 au centre du cercle C du repère angulaire intermédiaire 20c est différent des angles α1 au centre du cercle C des premier et deuxième repères angulaires 20a, 20b. Il est par exemple plus petit (figure 7). Un repère angulaire intermédiaire présentant une différence notable d'angle au centre du cercle C avec les premier et deuxième repères angulaires 20a, 20b permet à l'unité de traitement 5 de bien s'assurer que le créneau détecté est à associer à un repère angulaire intermédiaire 20c et non un repère angulaire 20a, 20b associé à l'une des positions extrêmes des essuie-glaces 2.

Selon un troisième mode de réalisation représenté sur la figure 8, le dispositif de repérage d'une position de repos 4 ne comporte pas de repère angulaire intermédiaire mais uniquement un premier et un deuxième repères angulaires 20a, 20b' présentant des angles α1, α3 au centre du cercle C différents. On peut ainsi utiliser le même dispositif de détection de position de repos 4 pour les portières droite et gauche puisqu'une position de repos peut être déterminée dans l'unité de traitement 5 comme correspondant au premier ou au deuxième repère angulaire 20a, 20b' qui sont différenciés.

En outre, d'autres formes de réalisation peuvent être envisagées pour détecter les premier et deuxième repères angulaires 20a, 20b et/ou repère angulaire intermédiaire 20c.

Par exemple, la détection des repères angulaires 20a, 20b, 20c peut être optique. Pour cela, le dispositif de repérage d'une position de repos 4 comporte des moyens de détection optiques des repères angulaires 20a, 20b, 20c. On prévoit par exemple que l'élément rotatif et les repères angulaires 20a, 20b, 20c présentent des couleurs contrastées.

On peut aussi utiliser certains moyens de réalisation de la détection par commutation électrique. Par exemple, l'élément rotatif est réalisé comme précédemment en matériau plastique et les repères angulaires 20a, 20b, 20c sont formés par des pistes métalliques.

Le dispositif de repérage d'une position de repos 4 comporte alors également un dispositif émetteur-récepteur de lumière (non représenté) reçu dans un élément fixé au véhicule. Le dispositif émetteur-récepteur de lumière est configuré pour envoyer et recevoir un faisceau lumineux en direction du cercle C dans lequel s'inscrivent les repères angulaires 20a, 20b, 20c. Les repères angulaires 20a, 20b, 20c métalliques réfléchissent alors mieux la lumière que l'élément rotatif et peuvent être détectés.

Selon un autre exemple de réalisation, la détection des repères angulaires 20a, 20b, 20c est magnétique. Pour cela, le dispositif de repérage d'une position de repos 4 comporte des moyens de détection magnétiques des repères angulaires 20a, 20b, 20c, par exemple un capteur à effet Hall.

On peut également pour cela, utiliser certains moyens de réalisation de la détection par commutation électrique. Par exemple, l'élément rotatif est réalisé comme précédemment en matériau plastique et les repères angulaires 20a, 20b, 20c sont formés par des pistes métalliques. Selon un autre exemple de réalisation, les repères angulaires 20a, 20b, 20c comportent des pistes magnétiques formées par de petits aimants.

Le dispositif de repérage d'une position de repos 4 comporte également un dispositif émetteur-récepteur de champ magnétique (non représenté) reçu dans un élément fixé au véhicule. Les repères angulaires 20a, 20b, 20c métalliques modifient alors les lignes de champ magnétiques et peuvent être détectés.

## Revendications

1. Dispositif de motorisation (3) comportant un moteur (10) électrique d'entraînement d'un essuie-glace (2) de véhicule automobile selon un mouvement de va-et-vient et un dispositif de repérage d'une position de repos (4) dudit moteur (10), ladite position de repos étant une position dans laquelle la rotation dudit moteur (10) est arrêtée afin d'arrêter un cycle de va-vient de l'essuie-glace (2) en début ou fin de phase montante ou en début ou en fin de phase descendante de l'essuie-glace (2), **caractérisé en ce que** ledit dispositif de repérage d'une position de repos (4) comprend un premier et un deuxième repères angulaires (20a, 20b), **en ce que** ledit moteur (10) est configuré pour entraîner en rotation lesdits premier et deuxième repères angulaires (20a, 20b), le premier et le deuxième repères angulaires (20a, 20b) étant agencés sur un cercle (C) et diamétralement opposés, **et en ce que** ledit dispositif de motorisation (3) est configuré pour que l'un des premier et deuxième repères angulaires (20a, 20b) puisse au choix correspondre à la position de repos (4) dudit moteur (10).

2. Dispositif de motorisation (3) selon la revendication précédente, **caractérisé en ce qu'**il comporte en outre au moins un repère angulaire intermédiaire (20c), agencé sur ledit cercle (C) dans lequel s'inscrivent le premier et le deuxième repères angulaires (20a, 20b), en étant espacé du premier et du deuxième repères angulaires (20a, 20b).

3. Dispositif de motorisation (3) selon la revendication précédente, **caractérisé en ce que** le nombre de repères angulaires intermédiaires (20c) agencés sur un demi-cercle (C1, C2) entre le premier et le deuxième repères angulaires (20a, 20b) est supérieur au nombre de repères angulaires intermédiaires (20c) agencés sur l'autre demi-cercle (C1, C2).

4. Dispositif de motorisation (3) selon la revendication précédente, **caractérisé en ce qu'**il comporte un unique repère angulaire intermédiaire (20c).

5. Dispositif de motorisation (3) selon l'une des revendications précédentes, **caractérisé en ce que** les repères angulaires (20a, 20b, 20c) définissent des angles (α1) au centre du cercle (C) identiques.

6. Dispositif de motorisation (3) selon l'une des revendications 2 à 4, **caractérisé en ce que** le repère angulaire intermédiaire (20c) définit un angle (α2) au centre du cercle (C) différent des angles (α1) au centre du cercle (C) des premier et deuxième repères angulaires (20a, 20b).

7. Dispositif de motorisation (3) selon l'une des revendications 1 à 4 et 6, **caractérisé en ce que** le premier et le deuxième repères angulaires (20a, 20b) définissent des angles (α1, α3) au centre du cercle (C) différents.

8. Dispositif de motorisation (3) selon l'une des revendications précédentes, **caractérisé en ce que** les repères angulaires (20a, 20b, 20c) sont métalliques.

9. Dispositif de motorisation (3) selon l'une des revendications précédentes, **caractérisé en ce qu'**il comporte un doigt suiveur de repère (21), élastiquement sollicité à l'encontre du cercle (C) dans lequel s'inscrivent les repères angulaires (20a, 20b, 20c).

10. Dispositif de motorisation (3) selon l'une des revendications précédentes, **caractérisé en ce qu'**il comporte :
- une piste continue annulaire (22), coaxiale audit cercle (C) dans lequel s'inscrivent les repères angulaires (20a, 20b, 20c) et connectée aux repères angulaires (20a, 20b, 20c), et
- un doigt suiveur de piste (23), élastiquement sollicité contre la piste continue annulaire (22).

11. Dispositif de motorisation (3) selon la revendication précédente, **caractérisé en ce que** la piste continue annulaire (22) et le doigt suiveur de piste (23) sont métalliques.

12. Dispositif de motorisation (3) selon l'une des revendications précédentes, **caractérisé en ce que** tous les repères angulaires (20a, 20b, 20c) sont portés par un élément rotatif entraîné en rotation par le moteur (10) électrique d'essuie-glace (2), les repères angulaires (20a, 20b, 20c) s'inscrivant sur un cercle (C) coaxial à l'élément rotatif.

13. Dispositif de motorisation (3) selon la revendication précédente, **caractérisé en ce que** l'élément rotatif est une roue dentée (18) entraînée en rotation par le moteur (10) électrique d'essuie-glace (2).

14. Dispositif de motorisation (3) selon l'une des revendications 12 ou 13, **caractérisé en ce que** l'élément rotatif est en matériau plastique.

15. Dispositif de motorisation (3) selon l'une des revendications précédentes, **caractérisé en ce qu'**il comporte des moyens de détection électriques ou optiques ou magnétiques des repères angulaires (20a, 20b, 20c).
